# EUROPÄISCHE PATENTSCHRIFT

(11) **EP 1 730 258 B1**
(45) Veröffentlichungstag und Bekanntmachung des Hinweises auf die Patenterteilung: **20.08.2008**
(21) Anmeldenummer: 04796937.3
(22) Anmeldetag: 09.11.2004
(51) Int. Cl.: C11D 3/39, C11D 3/10, A01N 59/16, A01N 59/02

(54) **REINIGUNGS-, DESINFEKTIONS- UND INDIKATORMITTEL**
CLEANING DISINFECTION AND INDICATOR AGENT
AGENT DE NETTOYAGE ET DE DESINFECTION ET AGENT INDICATEUR

(30) Priorität: 11.11.2003 AT 18172003
(43) Veröffentlichungstag der Anmeldung: 13.12.2006
(73) Patentinhaber: Thonhauser GmbH, 2380 Perchtoldsdorf (AT)
(72) Erfinder: THONHAUSER, Philip, A-2380 Perchtoldsdorf (AT)
(74) Vertreter: Henhapel, Bernhard
(86) Internationale Anmeldenummer: PCT/AT2004/000392
(87) Internationale Veröffentlichungsnummer: WO 2005/044968

(56) Entgegenhaltungen:
- WO-A-98/42812
- WO-A-03/035812
- AT-B- 408 987
- DATABASE WPI Section Ch, Week 198641 Derwent Publications Ltd., London, GB; Class A14, AN 1986-267353 XP002318621 & JP 61 192748 A (ASAHI CHEM IND CO LTD) 27. August 1986 (1986-08-27)

## Beschreibung

Die Erfindung betrifft ein Reinigungs-, Desinfektions- und Indikatormittel gemäß dem Oberbegriff von Anspruch 1, ein Verfahren zur Reinigung, Desinfektion und Prüfung der Reinheit von gewerblichen und industriellen Anlagen oder Anlagenteilen gemäß der Ansprüche 9 und 11, sowie die Verwendung einer Lösung eines erfindungsgemäßen Reinigungs-, Desinfektions- und Indikatormittels gemäß Anspruch 16.

Ein Reinigungs- und Desinfektionsmittel enthaltend ein wasserlösliches Permanganat, insbesondere Kaliumpermanganat (KMnO₄), sowie ein weiteres Oxidationsmittel, dessen Potential über jenem von Mangan VII zu Mangan VI, vorzugsweise über jenem von HO₂⁻ zu OH⁻, liegt, wurde in AT 408.987 offenbart. Wie darin ausgeführt wird, handelt es sich bei Kaliumpermanganat um ein starkes Oxidationsmittel, dessen keimtötende Wirkung seit langem bekannt ist. Im stark alkalischen Milieu beruht sie vor allem auf der Reduktion des siebenwertigen Mangans zur Oxidationsstufe +6. Aus unterschiedlichen Gründen ist eine Verwendung in Reinigungs-und Desinfektionsmitteln aber problematisch. So erweist sich Kaliumpermanganat aufgrund seiner starken Oxidationswirkung beispielsweise schwer verträglich mit anderen notwendigen Inhaltsstoffen eines Reinigers. Außerdem wirkt Wasser beim hohen Oxidationspotential des Kaliumpermanganats als Reduktionsmittel, sodass sich Stabilitätsprobleme des Reinigers in wässriger Lösung ergeben.

In AT 408.987 wird daher vorgeschlagen, dem Permanganat ein Oxidationsmittel hinzuzufügen, dessen Oxidationspotential jenes des Permanganats übersteigt. Ein geeignetes Oxidationsmittel dieser Art sind etwa Peroxodisulfate, vorzugsweise Natriumperoxodisulfat. Durch das Zusammenwirken des Permanganats mit Natriumperoxodisulfat werden Radikalreaktionen initiiert, in deren Folge es unter hochalkalischen Bedingungen, die durch Beigabe von Alkalihydroxiden erreicht werden, zur effizienten Oxidation organischer Substanzen kommt. Insbesondere ist bei dem in AT 408.987 vorgeschlagenen Reinigungs- und Desinfektionsmittel eine Verwirklichung in Pulverform möglich, was Vorteile hinsichtlich Lagerung und Transport mit sich bringt.

Des weiteren wird in AT 408.987 ein Farbumschlag im Zuge der Anwendung des in AT 408.987 beschriebenen Reinigungs- und Desinfektionsmittels beschrieben. Wie noch näher ausgeführt werden wird, führt die im Zuge des Reinigungsfortschrittes vorliegende Dominanz einer sechswertigen Mangan-Spezies zu einer grünen Färbung des Reinigungs- und Desinfektionsmittels, im Gegensatz zu der anfänglichen violetten Färbung, die durch Mangan VII bewirkt wird. Eine Gelbfärbung des Reinigungs- und Desinfektionsmittels zeigt hingegen das Vorliegen von Mangan(II)-Komplexen an und somit auch den weitestgehenden Verbrauch der enthaltenen Oxidationsmittel durch starke organische Verunreinigungen.

In der Praxis erweist sich aber nun, dass es für bestimmte Anwendungszwecke vorteilhaft ist, ein Reinigungs- und Desinfektionsmittel in flüssiger Form vorliegen zu haben. Wenngleich auch ein Reinigungs- und Desinfektionsmittel gemäß AT 408.987 in flüssiger Form herstellbar und lieferbar ist, ergeben sich Optimierungsmöglichkeiten insbesondere hinsichtlich Lagerungsbeständigkeit. Des weiteren erweist sich, dass die Beimengung eines Mittels zur Sicherstellung eines alkalischen Milieus oft nicht notwendig ist, da Alkalihydroxide, Alkalikarbonate, Alkaliphosphate, Alkalisilikate oder Erdalkalihydroxide insbesondere beim Industriekunden meistens reichlich verfügbar sind. So werden etwa Alkalihydroxide, insbesondere Natriumhydroxid, oft zur Reinigung von gewerblichen und industriellen Anlagen oder Anlagenteilen eingesetzt.

Ein Reinigungs- und Desinfektionsmittel gemäß AT 408.987 weist außerdem hinsichtlich der Ausnutzung des erwähnten Farbumschlages als Indikator für den Reinigungsfortschritt Unzulänglichkeiten auf. Es ergeben sich etwa Anwendungsfälle, in denen die Reinigung einer Anlage durch herkömmliche Methoden erfolgt, aber eine nachträgliche Prüfung der Reinheit interessant wäre. Hierzu würde sich eine Ausnutzung des erwähnten Farbumschlages anbieten, wobei aber etwa ein Reinigungs- und Desinfektionsmittel gemäß AT 408.987 speziell für die Anwendung als Mittel zur Prüfung der Reinheit einer Anlage Möglichkeiten zur Optimierung bietet. So wäre es etwa wünschenswert, eine Indikatorlösung zur Prüfung des Reinigungsfortschrittes während der Zirkulation eines üblicherweise verwendeten, hochalkalischen Reinigungsmittels, das allerdings frei von organischen Zusatzstoffen wie etwa Tensiden sein muss, beizufügen und den Reinigungsfortschritt möglicherweise auch quantitativ zu erfassen.

Es ist daher Ziel der Erfindung, ein Reinigungs-, Desinfektions- und Indikatormittel zu verwirklichen, das sich insbesondere auch für den Einsatz als Indikatormittel für die Erfassung des Reinigungsfortschrittes eignet. Dieses Mittel soll des weiteren in flüssiger Form vorliegen und lagerungsbeständig sein.

Diese Ziele werden durch die kennzeichnenden Merkmale von Anspruch 1 erreicht.

Anspruch 1 sieht hierbei ein Reinigungs-, Desinfektions- und Indikatormittel in flüssiger Form enthaltend ein wasserlösliches Permanganat, insbesondere zur Vermengung mit einem Mittel zur Sicherstellung eines alkalischen Milieus mit einem pH-Wert von mindestens 11 vor, das sich dadurch auszeichnet, dass es zusätzlich zum wasserlöslichen Permanganat ein weiteres Oxidationsmittel, dessen Oxidationspotential über jenem von Mangan VII zu Mangan VI liegt, pH-Puffersubstanzen, vorzugsweise primäre und/oder sekundäre Alkalikarbonate, sowie oxidationsbeständige Polyphosphate enthält. Mithilfe dieser Formulierung ist es möglich, ein lagerungsbeständiges Mittel in flüssiger Form zur Verfügung zu stellen, das im jeweiligen Anwendungsfall lediglich mit einem Mittel zur Sicherstellung eines alkalischen Milieus wie etwa Alkalihydroxiden oder Alkalikarbonaten zu vermengen ist. Als primäre und/oder sekundäre Alkalikarbonate kommen insbesondere Natriumkarbonat und/oder Natriumhydrogenkarbonat in Frage und die oxidationsbeständigen Polyphosphate ergeben Härtestabilisatoren (Komplexbildner), die gegen Peroxodisulfate resistent sind.

Vorzugsweise liegt das Oxidationspotential des weiteren Oxidationsmittels gemäß Anspruch 2 über jenem von HO₂⁻ zu OH⁻. Gemäß Anspruch 3 ist das weitere Oxidationsmittel ein Persulfat, vorzugsweise ein Peroxodisulfat, und gemäß Anspruch 4 Natriumperoxodisulfat. Gemäß Anspruch 5 handelt es sich bei dem Permanganat vorzugsweise um Kaliumpermanganat.

Als oxidationsbeständige Polyphosphate kommen unterschiedliche Verbindungen in Frage, es haben sich aber insbesondere gemäß Anspruch 6 Natrium-Tripolyphosphat und gemäß Anspruch 7 Natrium-Hexametaphosphat als vorteilhaft erwiesen, wobei auch eine Mischung dieser beiden Polyphosphate eingesetzt werden kann.

Gemäß Anspruch 8 wird folgende mengenmäßige Zusammensetzung des erfindungsgemäßen Reinigungs-, Desinfektions-und Indikatormittels vorgeschlagen:
- 3-5% Natriumperoxodisulfat, vorzugsweise 4%
- 0.06-0.08% Kaliumpermanganat, vorzugsweise 0.07%
- 5-7% Natrium-Tripolyphosphat, vorzugsweise 6%
- 9-11% Natrium-Hexametaphosphat, vorzugsweise 10%
- 2.0-3.0%, vorzugsweise 2.6%, einer Mischung aus Natriumkarbonat und Natriumhydrogenkarbonat, vorzugsweise im Verhältnis von 3:1

Die Mengenangaben beziehen sich dabei auf eine wässrige Lösung, vorzugsweise mithilfe von destilliertem Wasser. Anspruch 9 schlägt ein Verfahren zur Reinigung, Desinfektion und Prüfung der Reinheit von gewerblichen und industriellen Anlagen oder Anlagenteilen vor, bei dem in einem ersten Schritt das erfindungsgemäße Reinigungs-, Desinfektions- und Indikatormittel enthaltend ein wasserlösliches Permanganat, ein weiteres Oxidationsmittel, dessen Oxidationspotential über jenem von Mangan VII zu Mangan VI liegt, pH-Puffersubstanzen, wie etwa primäre und/oder sekundäre Alkalikarbonate, sowie oxidationsbeständige Polyphosphate in wässriger Lösung mit einem Mittel zur Sicherstellung eines alkalischen Milieus mit einem pH-Wert von mindestens 11, vorzugsweise mindestens 12, vermengt wird, in einem zweiten Schritt die so erhaltene Lösung durch die zu reinigenden bzw. desinfizierenden Anlagen oder Anlagenteilen zirkuliert wird und der Reinigungsfortschritt durch Ermittlung der Intensität des von der Lösung emittierten Lichts im violetten Wellenlängenbereich verfolgt wird. Dieses Verfahren kann als "batchweises" Reinigungsverfahren bezeichnet werden, bei dem eine bestimmte Menge des erfindungsgemäßen Reinigungs-, Desinfektions- und Indikatormittels vorgegeben wird, die durch die zu reinigenden Anlagen bzw. Anlagenteile zirkuliert wird. Wie noch näher ausgeführt werden wird, wird bei anfänglich verunreinigten Anlagen die Intensität des von der Reinigungs-, Desinfektions-und Indikatorlösung emittierten Lichts im violetten Wellenlängebereich zunächst abnehmen, wobei eine gleichbleibende Intensität einer violetten Färbung der Reinigungs-, Desinfektions- und Indikatorlösung eine weitestgehend reine Anlage anzeigt. Wie ebenfalls noch näher ausgeführt werden wird, wird im Zuge des fortschreitenden Reinigungsprozesses die Intensität des von der Reinigungs-, Desinfektions- und Indikatorlösung emittierten Lichts im grünen und gelben Wellenlängebereich zunehmen. Gemäß Anspruch 10 ist daher vorgesehen, dass der Reinigungsfortschritt zusätzlich durch Ermittlung der Intensität des von der Lösung emittierten Lichts im grünen und gelben Wellenlängenbereich verfolgt wird.

Selbstverständlich wird nach Abschluss des Reinigungsverfahrens mit Wasser nachgespült, um eine Beeinträchtigung der nachfolgenden Benutzung der gereinigten Anlage zu vermeiden.

Bei stärker verschmutzten Anlagen kann nun die Intensität des von der Reinigungs-, Desinfektions- und Indikatorlösung emittierten Lichts im violetten Wellenlängebereich so stark abnehmen, dass noch nicht von einer Reinheit der Anlage gesprochen werden kann. In diesem Fall ist einerseits klar ersichtlich, dass zunächst die Reinigungs- und Desinfektionsfunktion des erfindungsgemäßen Mittels im Vordergrund steht. Andererseits empfiehlt sich in diesen Fällen eine kontinuierliche Zudosierung des erfindungsgemäßen Reinigungs-, Desinfektions- und Indikatormittels, bis eine im wesentlichen gleichbleibende violette Färbung erreicht wird. Anspruch 11 sieht daher ein Verfahren zur Reinigung, Desinfektion und Prüfung der Reinheit von gewerblichen und industriellen Anlagen oder Anlagenteilen vor, bei dem eine wässrige Lösung mit einem pH-Wert von mindestens 11, vorzugsweise mindestens 12, durch die zu reinigenden bzw. desinfizierenden Anlagen oder Anlagenteilen zirkuliert wird, und während der Zirkulation ein flüssiges Reinigungs-, Desinfektions-und Indikatormittel enthaltend ein wasserlösliches Permanganat, ein weiteres Oxidationsmittel, dessen Oxidationspotential über jenem von Mangan VII zu Mangan VI liegt, pH-Puffersubstanzen, vorzugsweise primäre und/oder sekundäre Alkalikarbonate, sowie oxidationsbeständige Polyphosphate zugemischt wird und der Reinigungsfortschritt durch Ermittlung der Intensität des vom zugemischten Reinigungs-, Desinfektions- und Indikatormittels emittierten Lichts im violetten Wellenlängenbereich verfolgt wird. Je nach Verschmutzungsgrad der Anlage kann somit die Zeitdauer der Zudosierung des erfindungsgemäßen Reinigungs-, Desinfektions-und Indikatormittels gewählt werden, bis sich eine gleichbleibende, im Idealfall violette Färbung einstellt. Auch in diesem Fall kann gemäß Anspruch 12 der Reinigungsfortschritt zusätzlich durch Ermittlung der Intensität des vom zugemischten Reinigungs-, Desinfektions-und Indikatormittel emittierten Lichts im grünen und/oder gelben Wellenlängenbereich verfolgt werden.

Selbstverständlich wird wiederum nach Abschluss des Reinigungsverfahrens mit Wasser nachgespült, um eine Beeinträchtigung der nachfolgenden Benutzung der gereinigten Anlage zu vermeiden.

Gemäß Anspruch 13 wird für die erfindungsgemäßen Verfahren gemäß der Ansprüche 9 und 11 folgende mengenmäßige Zusammensetzung des erfindungsgemäßen Reinigungs-, Desinfektions- und Indikatormittels vorgeschlagen:
- 3-5% Natriumperoxodisulfat, vorzugsweise 4%
- 0.06-0.08% Kaliumpermanganat, vorzugsweise 0.07%
- 5-7% Natrium-Tripolyphosphat, vorzugsweise 6%
- 9-11% Natrium-Hexametaphosphat, vorzugsweise 10%
- 2.0-3.0%, vorzugsweise 2.6%, einer Mischung aus Natriumkarbonat und Natriumhydrogenkarbonat, vorzugsweise im Verhältnis von 3:1

Die Mengenangaben beziehen sich dabei wiederum auf eine wässrige Lösung, vorzugsweise mithilfe von destilliertem Wasser. Die Ermittlung der Intensität des vom zugemischten Reinigungs-, Desinfektions- und Indikatormittels emittierten Lichts im violetten Wellenlängenbereich kann auf unterschiedliche Weise erfolgen. So kann die Ermittlung auf einer rein visuellen Beobachtung der Färbung beruhen. Gemäß Anspruch 14 ist hingegen vorgesehen, dass die Ermittlung der Lichtintensität automatisiert erfolgt. Das kann etwa mithilfe von Spektral- oder Filterphotometer oder andere geeignete lichtwellenlängenspezifische Detektoren erfolgen, die die Intensität des emittierten Lichts bei bestimmten Wellenlängen messen. Mithilfe entsprechender Auswertungsalgorithmen kann aufgrund der so gemessenen Daten die Reinheit der Anlage bestimmt und nachfolgende Steuerungen des Reinigungsprozesses, etwa die Zudosierung des erfindungsgemäßen Reinigungs-, Desinfektions- und Indikatormittels, vorgenommen werden. Eine quantitative Bestimmung des Reinigungsgrades ist aber auch für Qualitätssicherungssysteme vorteilhaft, da der Zeitpunkt und der gemessene Reinheitsgrad der Anlage in entsprechenden Protokollen vermerkt und somit nachgewiesen werden kann.

Für eine umfassende Prozessbeurteilung kann es aber auch interessant sein, die abgeführte Schmutzfracht zu errechnen. Dies kann insbesondere bei einer automatisierten Erhebung der Intensitäten des emittierten Lichts im violetten, grünen und gelben Wellenlängenbereich erfolgen, da gemäß Anspruch 15 aus der Intensitätsänderung des emittierten Lichts sowie der Menge des zugeführten Reinigungs-, Desinfektions- und Indikatormittels die abgeführte Schmutzfracht ermittelt werden kann.

Wie bereits erwähnt wurde, ist die Reinigungs- und Desinfektionsfunktion des erfindungemäßen Mittels kaum von dessen Indikatorfunktion zu trennen, da auch bei einer beabsichtigten Anwendung als Indikator stets Reinigungs- und Desinfektionswirkung eintreten wird. Tatsächlich kann aber bei Anlagen, bei denen durch vorangegangene Reinigungsmethoden bereits ein guter Reinheitsgrad erzielt wurde, die Indikatorfunktion im Vordergrund stehen, da der Einsatz des erfindungemäßen Mittels kaum mehr Reinigung oder Desinfektion bewirken muss. Auf diese Anwendungsfälle zielt Anspruch 16 ab, der die Verwendung einer Lösung aus einem Reinigungs-, Desinfektions- und Indikatormittel enthaltend ein wasserlösliches Permanganat, ein weiteres Oxidationsmittel, dessen Oxidationspotential über jenem von Mangan VII zu Mangan VI liegt, pH-Puffersubstanzen, vorzugsweise primäre und/oder sekundäre Alkalikarbonate, sowie oxidationsbeständige Polyphosphate und einem Mittel zur Sicherstellung eines alkalischen Milieus mit einem pH-Wert von mindestens 11, vorzugsweise mindestens 12, als Indikatorlösung zur Ermittlung der Reinheit von gewerblichen und industriellen Anlagen oder Anlagenteilen mittels Ermittlung der Intensität des von der Lösung emittierten Lichts im violetten Wellenlängenbereich beschreibt. Gemäß Anspruch 17 kann des weiteren im Zuge dieser Verwendung vorgesehen sein, dass die Ermittlung der Reinheit von gewerblichen und industriellen Anlagen oder Anlagenteilen zusätzlich mithilfe einer Ermittlung der Intensität des von der Lösung emittierten Lichts im grünen und/oder gelben Wellenlängenbereich erfolgt.

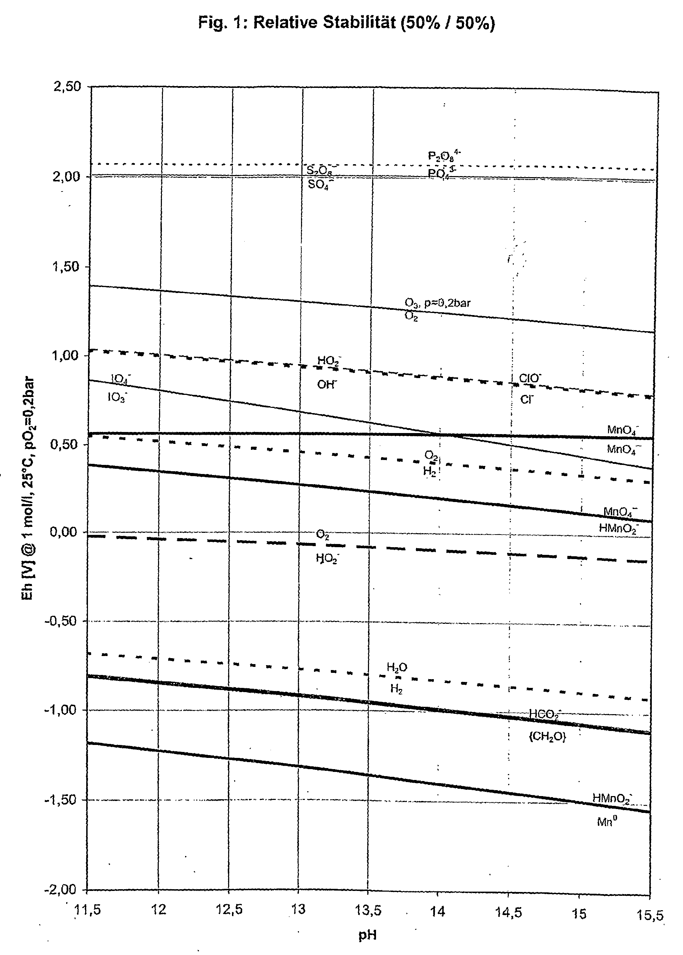

Die für die Wirksamkeit des erfindungsgemäßen Reinigungs-, Desinfektions- und Indikatormittels relevanten Reaktionen werden nun unter Zuhilfenahme eines Pourbaix-Diagrammes (Fig. 1; für 25°C, 1 bar atmosphärischem Druck und einer Elektrolyt-Aktivität von 1 mol/l) im Detail beschrieben.

zunächst wird ein starkes Oxidationsmittel in erfindungsgemäßer Form und Konzentration bereitgestellt, wobei es sich dabei vorzugsweise um ein Alkaliperoxodisulfat handelt. Obwohl das Alkaliperoxodisulfat ein starkes Oxidationsmittel ist, reagiert es bei Raumtemperatur und unter Abwesenheit entsprechender Katalysatoren mit organischen Verbindungen nur langsam. Die effiziente und vollständige Oxidation organischer Substanzen wird vielmehr durch das Kaliumpermanganat initiiert. Organischer Kohlenstoff wird dabei zu Oxalat oxidiert. Zur Beschleunigung der Reaktionskinetik zwischen Kaliumpermanganat und organischen Substanzen werden Alkalihydroxide, vorzugsweise NaOH, und/oder Alkalikarbonate beigegeben um so ein alkalisches Milieu zu garantieren.

Bei der Anwendung der Erfindung wird das Reinigungs-, Desinfektions- und Indikatormittel zunächst mit einem Mittel zur Sicherstellung eines alkalischen Milieus mit einem pH-Wert von mindestens 11 vermengt und Wasser in geeigneter Dosierung zugemischt. Als Mittel zur Sicherstellung des geforderten alkalischen Milieus eignen sich in herkömmlicher Weise Alkalihydroxide, Alkalikarbonate, Alkaliphosphate, Alkalisilikate oder Erdalkalihydroxide. Die erfindungsgemäß vorgesehenen Härtestabilisatoren verhindern hierbei die Ausscheidung von Erdalkalikarbonaten und -hydroxiden aufgrund der ansteigenden Alkalität der Lösung, was besonders bei großen Wasserhärten entscheidend ist. Selbstverständlich sollte das verwendete Wasser keine oder nur sehr geringe Mengen an organischen Stoffen enthalten, da dies die Indikatorfunktion des erfindungsgemäßen Reinigungs-, Desinfektions- und Indikatormittels beeinträchtigen würde.

Bei der Vermengung des erfindungsgemäßen Reinigungs-, Desinfektions- und Indikatormittels mit Wasser erfolgt zunächst Oxidation von Hydroxid-Ionen, und zwar einerseits durch das Peroxodisulfat (Gl. 1), andererseits aber auch durch das Permanganat (Gl. 2), wobei siebenwertiges Mangan zu Mangan mit Oxidationszahl +6 reduziert wird. Dabei kommt es weiters zur Freisetzung von Sauerstoff.

Gl. 1: 3 OH⁻ + S₂O₈²⁻ = HO₂⁻ + 2 SO₄²⁻ + H₂O

Gl. 2 : 4 OH + 4 MnO₄⁻ = O₂↑ + 4 MnO₄²⁻ + 2 H₂O

Das bei der Oxidation von Hydroxid-Ionen durch das Peroxodisulfat entstehende Wasserstoffperoxid-Ion kann allerdings eine Reoxidation des Mn(VI) zu Mn(VII) bewirken (Gl. 3):

Gl. 3: HO₂⁻ + 2 MnO₄²⁻ + H₂O = 3 OH⁻ + 2 MnO₄⁻

Wenn die Zersetzungsgeschwindigkeit des Peroxodisulfats mit jener des Permanganats nicht schritt halten kann, etwa weil die Zersetzung des Permanganats durch eine hohe Konzentration und/oder gute Oxidierbarkeit des organischen Stoffes begünstigt wird, wird es zu vermehrter Bildung von Mn(VI) kommen. Die Dominanz der sechswertigen Mangan-Spezies führt zu einer grünen Färbung der Lösung, im Gegensatz zu der anfänglichen violetten Färbung, die durch Mangan VII bewirkt wird. Die Oxidation organischer Verbindungen (hier mit "CH₂O" bezeichnet, was allgemein für Kohlenstoff der Oxidationsstufe 0 und im speziellen für ein Kohlehydrat steht) zu Oxalat durch Mn VII und die damit einhergehende Zersetzung des Permanganats erfolgt rasch, da der hohe pH-Wert auf zahlreiche organische Stoffe anionisierend wirkt, was den Angriff von anionischen Oxidationsmitteln erleichtert. Die Oxidation organischer Substanzen durch Mn VII involviert dabei auch MnO₄³⁻, wo Mangan mit der Oxidationszahl +5 vorliegt (Gl. 4), durch Permanganat aber wieder zu sechswertigem Mangan oxidiert wird (Gl. 5).

Gl. 4: 2 {CH₂O} + 3 MnO₄⁻ + 2 H₂O = C₂O₄²⁻ + 3 MnO₄³⁻ + 8 H⁺

Gl. 5: MnO₄³⁻ + MnO₄⁻ = 2 MnO₄²⁻

Der Angriff des Permanganats auf organische Substanzen gemäß Gl. 4 bedingt allerdings nicht die hohe Wirksamkeit des erfindungsgemäßen Reinigungs-, Desinfektions- und Indikatormittels. Die schnelle und effiziente Oxidation organischer Stoffe wird vielmehr durch die nun startenden Radikalreaktionen verursacht. Ausgangspunkt ist dabei ein SO₄⁻-Radikal, das aus dem Peroxodisulfat hervorgeht. Dieses Radikal kann zunächst durch homolytische Spaltung des Peroxodisulfats (Gl. 6), oder durch dessen Reaktion mit organischen Verbindungen entstehen (Gl. 7):

Gl. 6: S₂O₈²⁻ = 2 **SO₄⁻**

Gl. 7: 2S₂O₈²⁻ + 2{CH₂O} + 2H₂O = 2SO₄²⁻ + 2**SO₄⁻** +{C⁺¹-R} + 4_{H}⁺

In Gleichung 7 bezeichnet dabei **{C⁺¹-R}** ein Radikal mit Kohlenstoff in der Oxidationsstufe +1, z.B. formal **{H₂C₂O₃}²⁻**, bei dem zwischen den Kohlenstoff-Atomen eine Doppelbindung besteht. Fettgedruckte Verbindungen kennzeichnen Radikale bzw. Radikalionen.

Wie Untersuchungsergebnisse zeigen, scheint allerdings das **SO₄⁻** in erster Linie durch das Zusammenwirken mit vorhandenen Mangan-Verbindungen zu entstehen. Es kann angenommen werden, dass Mangan VI bzw. Mangan V-Verbindungen radikalbildende Wirkung auf Peroxodisulfat gemäß der Reaktionen 8 und 9 haben:

Gl. 8: MnO₄²⁻ + **C₂O₄²⁻** + 2 H₂O = MnO₄³⁻ + 2 CO₃²⁻ + 4 H⁺

Gl. 9: MnO₄³⁻ + S₂O₈²⁻ = MnO₄²⁻ + SO₄²⁻ + **SO₄⁻**

Es wird nun eine Kaskade an Radikalreaktionen in Gang gesetzt, von denen im folgenden nur die wichtigsten genannt werden können. So bewirkt das **SO₄⁻** -Radikal etwa die Bildung von OH-Radikalen (Gl. 10). Dieses Radikal zählt bekannterweise zu den reaktionsfähigsten Verbindungen und oxidiert organische Substanzen (Gl. 11), wobei in weiterer Folge wieder SO₄⁻ - Radikale entstehen können (Gl. 12):

Gl. 10: **SO₄⁻** + H₂O = HSO₄⁻ + **OH·**

Gl. 11: 2 **OH·** + 2 {CH₂O} + H₂O = 2 OH⁻ + **{C⁺¹-R}** + 4 H⁺

Gl. 12: **{C⁺¹-R}** + 4S₂O₈²⁻ + H₂O = 4SO₄²⁻ + **4SO₄⁻** + C₂O₄²⁻ + 4H⁺

Das Hydroxid-Radikal kann nach seiner Bildung gemäß Gl. 10 allerdings auch mit Oxalat reagieren (Gl. 13), wobei in weiterer Folge das Sulfatradikal durch Peroxodisulfat wieder hergestellt wird (Gl. 14):

Gl. 13: OH· + C₂O₄²⁻ =OH⁻ + C₂O₄⁻

Gl. 14: C₂O₄⁻ + S₂O₈²⁻ + 2 H₂O = 2 CO₃²⁻ + SO₄²⁻ + SO₄⁻ + 4 H⁺

Ein anderer Reaktionskanal für die Oxidation organischer Verbindungen involviert das Sulfatradikal selbst. Das Sulfatradikal oxidiert organische Verbindungen (G1. 15) und kann schließlich durch Peroxodisulfat wieder nachgeliefert werden (Gl. 16):

Gl. 15: 2 SO₄⁻ + 2 {CH₂O} + H₂O = 2 SO₄²⁻ + {C⁺¹-R} + 4 H⁺

Gl. 16: {C⁺¹-R} + 4S₂O₈²⁻ + H₂O = 4SO₄²⁻ + 4SO₄⁻ + C₂O₄²⁻ + 4H⁺

Auch das Sulfatradikal kann mit Oxalat reagieren (Gl. 17), wobei es wiederum mittels eines Peroxodisulfat-Moleküls nachgeliefert wird (Gl. 18):

Gl. 17: SO₄⁻ + C₂O₄²⁻ = SO₄²⁻ + C₂O₄⁻

Gl. 18: C₂O₄⁻ + S₂O₈²⁻ + 2 H₂O = 2 CO₃²⁻ + SO₄²⁻ + SO₄⁻ + 4 H⁺

Es wird somit ersichtlich, dass es im Zuge des Ablaufens der Reaktionen 10-18 zu einer effizienten, da radikalvermittelten Oxidation organischer Verbindungen kommt, die durch Mangan-Verbindungen unterschiedlicher Oxidationsstufen eingeleitet und durch Peroxodisulfat aufrechterhalten wird.

Rekombinationsreaktionen zwischen Radikalen bringen die Kettenreaktionen 10-18 schließlich zum Abbruch (Gl. 19-24):

Gl. 19: **SO₄⁻** + **SO₄⁻** = S₂O₈²⁻

Gl. 20: **SO₄⁻** + **OH·** = HSO₅⁻ (instabil)

Gl. 21: 4 **SO₄⁻** + **{C⁺¹-R}** + H₂O = 4 SO₄²⁻ + C₂O₄²⁻ + 4 H⁺

Gl. 22: **OH.** + **OH·** = H₂O₂

Gl. 23: 4 **OH·** + **{C⁺¹-R}** + H₂O = 4 OH⁻ + C₂O₄²⁻ + 4 H⁺

Gl. 24: 3 **{C⁺¹-R}** + 3 H₂O = C₂O₄²⁻ + 4 {CH₂O} + 4 OH⁻

(Disproportionierung von z.B. **{H₂C₂O₃}²⁻)**

Da sich Manganat (VI) in Wasser thermodynamisch instabil verhält, kommt es in weiterer Folge zu einer Dominanz von Mangan II (Gl. 25):

Gl. 25: MnO₄²⁻ + H₂O = O₂↑ + HMnO₂⁻ + OH⁻

Eine Gelbfärbung der Lösung zeigt das Vorliegen von Mangan(II), das Oxalat-Komplexe bildet, an und somit auch den weitestgehenden Abschluss des Reinigungs- und Desinfektionsprozesses.

Während des gesamten Ablaufes der Kettenreaktionen 10-25 kommt es zur Freisetzung von Sauerstoff und Wasserstoffperoxid (Gl. 1, 2, 16 und 25), was den Reinigungs- und Desinfektionsprozess zusätzlich unterstützt.

Als zusätzliches, starkes Oxidationsmittel müssen nicht ausschließlich Peroxodisulfat-Verbindungen verwendet werden. Auch andere Oxidationsmittel, deren Oxidationspotential über jenem von Mangan VII zu Mangan VI (Linie MnO₄⁻/MnO₄⁻⁻ im Pourbaix Diagramm von Fig. 1), vorzugsweise über jenem von HO₂⁻ zu OH⁻ (Linie HO₂⁻/ OH⁻ im Pourbaix Diagramm von Fig. 1), liegt, kommen dafür in Frage. Bezüglich der Linie MnO₄⁻/MnO₄⁻⁻ wäre dazu etwa auch Periodat geeignet, das im Rahmen eines etwas modifizierten Chemismus für eine Reoxidation von Manganat. V bzw. VI. zu Permanganat sorgt. Kaliummonopersulfat (Tripelsalz) kann als Substitut für Peroxodisulfat herangezogen werden. Die Verwendung von Peroxodiphosphat und Ozon ist zwar theoretisch denkbar, technisch jedoch kaum zu verwirklichen. Peroxodiphosphat ist derzeit in größeren Mengen nicht verfügbar und Ozon zersetzt sich aufgrund seiner hohen Reaktivität sehr rasch, wodurch es für kommerzielle Reinigungs-, Desinfektions- und Indikatormittel nicht geeignet zu sein scheint. Hypochlorit wäre zwar in wässriger Lösung ausreichend stabil, die elektrochemische Dominanz des Redoxpaares ClO⁻/Cl⁻ ist zur Bildung von HO₂⁻-Ionen jedoch auch bei längerer Lagerung sicherzustellen.

Die Anwendung des erfindungsgemäßen Reinigungs-, Desinfektions- und Indikatormittels kann etwa als "batchweises" Reinigungsverfahren erfolgen, bei dem eine bestimmte Menge des erfindungsgemäßen Reinigungs-, Desinfektions- und Indikatormittels vorgegeben wird, die durch die zu reinigenden Anlagen bzw. Anlagenteile zirkuliert wird. Hierzu wird eine geeignete Wassermenge mit 0.5-1.5 % des erfindungsgemäßen Reinigungs-, Desinfektions- und Indikatormittels versetzt, durchmischt und anschließend mithilfe einer Zugabe von Alkalihydroxiden, Alkalikarbonaten, Alkaliphosphaten, Alkalisilikaten und/ oder Erdalkalihydroxiden auf einen pH-Wert von mindestens 11, vorzugsweise mindestens 12, gebracht. Selbstverständlich können hierzu auch vorhandene Apparaturen zur Reinigung der Anlagen, wie etwa CIP ("cleaning in place")-Anlagen, verwendet werden. Die so erhaltene Lösung wird in weiterer Folge in der Anlage zirkuliert, wobei der Rücklauf bzw. auch das gesamte Volumen am Ende der Evaluation mittels Farbvergleich und/oder photometrische Messung beurteilt wird. Bei anfänglich verunreinigten Anlagen wird die Intensität des von der Reinigungs-, Desinfektions- und Indikatorlösung emittierten Lichts im violetten Wellenlängebereich zunächst abnehmen, und die Intensität des von der Reinigungs-, Desinfektions- und Indikatorlösung emittierten Lichts im grünen und gelben Wellenlängebereich zunehmen. Je stärker die Farbe von der reinvioletten Ausgangsfarbe abweicht, desto stärker war die Verschmutzung des Gesamtsystems. Bei starker Verschmutzung sind Reinigung mittels einer neuen Menge an Reinigungs-, Desinfektions- und Indikatorlösung und daran anschließend eine erneute Evaluation zu wiederholen. Eine gleichbleibende Intensität einer violetten Färbung der Reinigungs-, Desinfektions- und Indikatorlösung zeigt eine weitestgehend reine Anlage an. Die Farbe des Rücklaufes der Reinigungs-, Desinfektions- und Indikatorlösung wird hierbei eine Mischung aus violett und grün sein, wobei mitunter auch deutliche GrünAnteile enthalten sein können. Jedenfalls darf die Farbe des Rücklaufes nicht gelb sein. In diesem Fall ist die Reinigung mithilfe einer neuen Menge an Reinigungs-, Desinfektions- und Indikatorlösung zu wiederholen.

Die Ermittlung der Intensität des vom zugemischten Reinigungs-, Desinfektions- und Indikatormittels emittierten Lichts im violetten Wellenlängenbereich kann auf unterschiedliche Weise erfolgen. So kann die Ermittlung auf einer rein visuellen Beobachtung der Färbung beruhen. Bevorzugt wird die Ermittlung der Lichtintensität aber automatisiert erfolgt. Das kann etwa mithilfe von Spektral-oder Filterphotometer oder anderen geeigneten lichtwellenlängenspezifischen Detektoren erfolgen, die die Intensität des emittierten Lichts bei bestimmten Wellenlängen messen. Mithilfe entsprechender Auswertungsalgorithmen kann aufgrund der so gemessenen Daten die Reinheit der Anlage bestimmt und nachfolgende Steuerungen des Reinigungsprozesses, etwa die Zudosierung des erfindungsgemäßen Reinigungs-, Desinfektions- und Indikatormittels, vorgenommen werden. Eine quantitative Bestimmung des Reinigungsgrades ist aber auch für Qualitätssicherungssysteme vorteilhaft, da der Zeitpunkt und der gemessene Reinheitsgrad der Anlage in entsprechenden Protokollen vermerkt und somit nachgewiesen werden kann.

Für eine umfassende Prozessbeurteilung kann es aber auch interessant sein, die abgeführte Schmutzfracht zu errechnen. Dies kann insbesondere bei einer automatisierten Erhebung der. Intensitäten des emittierten Lichts im violetten, grünen und gelben Wellenlängenbereich erfolgen, da aus der Intensitätsänderung des emittierten Lichts sowie der Menge des zugeführten Reinigungs-, Desinfektions- und Indikatormittels die abgeführte Schmutzfracht ermittelt werden kann.

Selbstverständlich wird nach Abschluss des Reinigungsverfahrens mit Wasser nachgespült, um eine Beeinträchtigung der nachfolgenden Benutzung der gereinigten Anlage zu vermeiden.

Im Gegensatz zu "batchweisen" (diskontinuierlichen) Reinigungsverfahren kann in manchen Fällen auch eine kontinuierliche Zudosierung des erfindungsgemäßen Reinigungs-, Desinfektions- und Indikatormittels, bis eine gleichbleibende violette Färbung e.rreicht wird, angezeigt sein. Eine solche Vorgangsweise wird sich insbesondere bei stärker verschmutzten Anlagen empfehlen. Hierbei wird etwa eine alkalische Ausgangslösung in einem Tank, aus dem die Anlage durchströmt werden kann, vorgelegt. Während der Zirkulation dieser alkalischen Ausgangslösung durch die Anlage wird in die abströmende Ausgangslösung das erfindungsgemäße Reinigungs-, Desinfektions- und Indikatormittel zugemischt, und zwar so lange, bis im Rücklauf zum Tank der erwünschte (Misch-) Farbwert erreicht ist.

Bei Verfahren dieser Art steht zunächst die Reinigungs- und Desinfektionsfunktion des erfindungsgemäßen Reinigungs-, Desinfektions- und Indikatormittels im Vordergrund. Je nach Verschmutzungsgrad der Anlage kann somit die Zeitdauer der Zudosierung des erfindungsgemäßen Reinigungs-, Desinfektions-und Indikatormittels gewählt werden, bis sich eine gleichbleibende violette Färbung einstellt. Auch in diesem Fall kann der Reinigungsfortschritt zusätzlich durch Ermittlung der Intensität des vom zugemischten Reinigungs-, Desinfektions- und Indikatormittel emittierten Lichts im grünen und/oder gelben Wellenlängenbereich verfolgt werden. Die Ermittlung des Farbwertes kann wieder mithilfe visueller Beobachtung oder apparativ sowie automatisiert mithilfe photometrischer Inline-Messungen erfolgen.

Selbstverständlich wird wiederum nach Abschluss des Reinigungsverfahrens mit Wasser nachgespült, um eine Beeinträchtigung der nachfolgenden Benutzung der gereinigten Anlage zu vermeiden.

Alle Bestandteile des erfindungsgemäßen Reinigungs-, Desinfektions- und Indikatormittels liegen dabei in flüssiger Form vor, wobei durch die erst kurz vor dem Anwendungsfall stattfindende Vermengung mit alkalischen Mitteln sowie Wasser äußerst vorteilhaft für die Lagerungsbeständigkeit des erfindungsgemäßen Mittels ist.

Die folgenden Beispiele sollen die Vielfältigkeit der Einsatzmöglichkeiten des erfindungsgemäßen Reinigungs-, Desinfektions- und Indikatormittels dokumentieren und sind nicht im einschränkenden Sinn zu verstehen.

### Beispiel 1:

Die Karbonatoren und Füller der Abfüllanlage eines Mineralwasserproduzenten soll mithilfe des erfindungsgemäßen Reinigungs-, Desinfektions- und Indikatormittels auf deren Reinheit überprüft werden. Die Reinigung erfolgt üblicherweise in einem CIP-Kreislauf mithilfe einer 2%-Ameisensäurelösung und einer anschließenden Desinfektion mithilfe einer 0.1%-Peressigsäure. Im Regelfall erfolgt keine alkalische Reinigung. Eine Überprüfung der Reinheit der Anlage erfolgt üblicherweise nur hinsichtlich der Vollständigkeit der Peressigsäure-Ausspülung über Evaluierung des pH-Wertes, der Säurekapazität und/oder der Leitfähigkeit der Spülflüssigkeit, vorzugsweise Wasser.

Dennoch kann vor der Überprüfung der Reinheit der Anlage zunächst von einer vergleichsweise sauberen Anlage ausgegangen werden, sodass das erfindungsgemäße Mittel vor allem als Indikator eingesetzt werden soll. Das heißt, dass man in erster Linie keine Nutzung der reinigenden und desinfizierenden Wirkung des Mittels anstrebt, sondern lediglich auf dessen Indikatorwirkung abzielt. Hierzu wird im Sinne eines "batchweisen" (diskontinuierlichen) Verfahrens in einem Tank (z.B. im CIP-Tank) ein Volumen von 6000 Liter Wasser vorbereitet. Das Totvolumen der zu prüfenden Anlage beträgt 4000 Liter. Unmittelbar vor Beginn der Zirkulation wird das erfindungsgemäße Reinigungs-, Desinfektions- und Indikatormittel in einer Konzentration von 1% zugesetzt. Anschließend wird mithilfe der beim Mineralwasserproduzenten verfügbaren Lauge (NaOH) eine Konzentration von 0.50% eingestellt, was einem pH-Wert der Lösung von über 12.5 entspricht. Die Temperatur der Lösung beträgt 54°C und ihre Farbe ist violett.

Die so erhaltene Lösung wird nun in einem ersten Reinigungsschritt für 25 min durch die zu prüfende Anlage zirkuliert. Nach Beendigung der Zirkulation weist die erfindungsgemäße Indikatorflüssigkeit eine gelbgrüne Farbe auf, was ungefähr einem 50:50-Verhältnis von Mangan VI zu Mangan II entspricht. Die mobilisierte Schmutzfracht wurde mit 80-120g (als {CH₂O}) berechnet. Die Anlage erweist sich somit in einem unerwarteten Ausmaß verschmutzt, sodass trotz eigentlich beabsichtigter, bloßer Indikation des Reinheitsgrades der Anlage das erfindungemäße Mittel auch seine reinigende und desinfizierende Wirkung entfaltet hat.

Da aufgrund der gelblichen Farbe noch nicht von einer Reinheit der Anlage gesprochen werden kann, wird nochmals 1% des erfindungsgemäßen Mittels dem Tank hinzugefügt. Dadurch stellt sich eine weinrote Mischfarbe der Lösung ein. Nach weiteren 12 min Zirkulation der Lösung durch die Anlage blieb die Farbe dennoch weitestgehend unverändert, sodass von einem Abschluss des Reinigungsprozesses gesprochen werden kann und die Anlage tatsächlich als sauber bezeichnet werden kann.

### Beispiel 2:

Der Würzeweg im Sudhaus einer Brauerei, der unter anderem einen Platten-Wärmetauscher umfasst, soll mithilfe des erfindungsgemäßen Reinigungs-, Desinfektions- und Indikatormittels gereinigt und auf dessen Reinheit überprüft werden. Die Reinigung erfolgt üblicherweise bis zu dreimal täglich in einem CIP-Kreislauf mithilfe einer 3-4 %-NaOH-Lösung mit einem phosphorsauren Tensid-Additiv in einer Menge unter 0.5%. Die Temperatur beträgt hierbei etwa 80-85°C. Die Reinigungslösung wird gestapelt, abgeschlammt und über Leitfähigkeitsmessungen mit Lauge nachgeschärft. Üblicherweise erfolgt keine saure Nachreinigung, sondern, falls erforderlich, eine Neutralisation mit CO₂ sowie eine Desinfektion mit Dampf. Eine Überprüfung der Reinheit der Anlage erfolgt üblicherweise nur hinsichtlich der Vollständigkeit der Ausspülung der Reinigungslösung über Evaluierung des pH-Wertes, der Säurekapazität und/oder der Leitfähigkeit der Spülflüssigkeit, vorzugsweise Wasser.

In diesem Fall muss von einer vergleichsweise verschmutzten Anlage ausgegangen werden, sodass das erfindungsgemäße Mittel zunächst vor allem seine Reinigungsfunktion entfalten wird. Hierzu wird im Sinne eines kontinuierlichen Verfahrens in einem Tank (z.B. im CIP-Tank) ein Volumen von 6500 Liter Wasser vorbereitet. Das Totvolumen der zu prüfenden Anlage beträgt 5000 Liter. Mithilfe der bei der Brauerei verfügbaren Lauge (NaOH) wird eine Konzentration von 1.50% eingestellt, was einem pH-Wert der Lösung von zumindest 13.0 entspricht. Die so erhaltene, alkalische Ausgangslösung wird durch die zu reinigenden Anlagenteile zirkuliert.

Während der Zirkulation dieser Ausgangslösung (Temperatur 60°C) wird in die abströmende Lösung das erfindungsgemäße Reinigungs-, Desinfektions- und Indikatormittel zugesetzt. Während einer Zirkulationsdauer von 80 min werden so insgesamt 200 Liter zugesetzt (3.0 %). Die erzielte Farbe der Reinigungslösung nach der Zirkulation ist tiefgelb und enthält mehrere 100 mg/l braune Trübstoffe. Die mobilisierte Schmutzfracht wurde mit 20-30 kg (als {CH₂O}) errechnet. Während der Zugabe bzw. Zirkulation der Reinigungslösung durch die Anlage können immer wieder Tendenzen zu Grün/Gelbgrün beobachtet werden. Bei steigender Konzentration des erfindungsgemäßen Reinigungs-, Desinfektions- und Indikatormittels schlägt die Farbe des Rücklaufes durch Mobilisierung neuer Schmutzdepots immer wieder nach Reingelb um.

In diesem Fall empfiehlt sich eine chemische Grundreinigung der Anlage bzw. eine Zerlegung der Anlage und des Wärmetauschers mit nachfolgender mechanischer Reinigung. Nach erfolgter Reinigung kann eine erneute Evaluation mit dem erfindungsgemäßen Reinigungs-, Desinfektions- und Indikatormittel durchgeführt werden.

## Patentansprüche

1. Reinigungs-, Desinfektions- und Indikatormittel in flüssiger Form enthaltend ein wasserlösliches Permanganat, insbesondere zur Vermengung mit einem Mittel zur Sicherstellung eines alkalischen Milieus mit einem pH-Wert von mindestens 11, **dadurch gekennzeichnet, dass** es zusätzlich zum wasserlöslichen Permanganat
• ein weiteres Oxidationsmittel, dessen Oxidationspotential über jenem von Mangan VII zu Mangan VI liegt,
• pH-Puffersubstanzen, vorzugsweise primäre und/oder sekundäre Alkalikarbonate wie etwa Natriumkarbonat und/oder Natriumhydrogenkarbonat, sowie
• oxidationsbeständige Polyphosphate
enthält.

2. Reinigungs-, Desinfektions- und Indikatormittel nach Anspruch 1, **dadurch gekennzeichnet, dass** das Oxidationspotential des weiteren Oxidationsmittels über jenem von HO₂⁻ zu OH⁻ liegt.

3. Reinigungs-, Desinfektions- und Indikatormittel nach Anspruch 1 oder 2, **dadurch gekennzeichnet, dass** das weitere Oxidationsmittel ein Persulfat, vorzugsweise ein Peroxodisulfat, ist.

4. Reinigungs-, Desinfektions- und Indikatormittel nach Anspruch 3, **dadurch gekennzeichnet, dass** das Peroxodisulfat Natriumperoxodisulfat ist.

5. Reinigungs-, Desinfektions- und Indikatormittel nach einem der Ansprüche 1 bis 4, **dadurch gekennzeichnet, dass** das Permanganat Kaliumpermanganat ist.

6. Reinigungs-, Desinfektions- und Indikatormittel nach einem der Ansprüche 1 bis 5, **dadurch gekennzeichnet, dass** es als oxidationsbeständiges Polyphosphat Natrium-Tripolyphosphat enthält.

7. Reinigungs-, Desinfektions- und Indikatormittel nach einem der Ansprüche 1 bis 6, **dadurch gekennzeichnet, dass** es als oxidationsbeständiges Polyphosphat Natrium-Hexametaphosphat enthält.

8. Reinigungs-, Desinfektions- und Indikatormittel nach einem der Ansprüche 1 bis 7, **dadurch gekennzeichnet, dass** es folgende Zusammensetzung aufweist:
• 3-5% Natriumperoxodisulfat, vorzugsweise 4%
• 0.06-0.08% Kaliumpermanganat, vorzugsweise 0.07%
• 5-7% Natrium-Tripolyphosphat, vorzugsweise 6%
• 9-11% Natrium-Hexametaphosphat, vorzugsweise 10%
• 2.0-3.0%, vorzugsweise 2.6%, einer Mischung aus Natriumkarbonat und Natriumhydrogenkarbonat, vorzugsweise im Verhältnis von 3:1

9. Verfahren zur Reinigung, Desinfektion und Prüfung der Reinheit von gewerblichen und industriellen Anlagen oder Anlagenteilen, **dadurch gekennzeichnet, dass** in einem ersten Schritt ein Reinigungs-, Desinfektions- und Indikatormittel enthaltend
• ein wasserlösliches Permanganat,
• ein weiteres Oxidationsmittel, dessen Oxidationspotential über jenem von Mangan VII zu Mangan VI liegt,
• pH-Puffersubstanzen, vorzugsweise primäre und/oder sekundäre Alkalikarbonate wie etwa Natriumkarbonat und/oder Natriumhydrogenkarbonat, sowie
• oxidationsbeständige Polyphosphate
in wässriger Lösung mit einem Mittel zur Sicherstellung eines alkalischen Milieus mit einem pH-Wert von mindestens 11, vorzugsweise mindestens 12, vermengt wird, in einem zweiten Schritt die so erhaltene Lösung durch die zu reinigenden bzw. desinfizierenden Anlagen oder Anlagenteilen zirkuliert wird und der Reinigungsfortschritt durch Ermittlung der Intensität des von der Lösung emittierten Lichts im violetten Wellenlängenbereich verfolgt wird.

10. Verfahren nach Anspruch 9, **dadurch gekennzeichnet, dass** der Reinigungsfortschritt zusätzlich durch Ermittlung der Intensität des von der Lösung emittierten Lichts im grünen und gelben Wellenlängenbereich verfolgt wird.

11. Verfahren zur Reinigung, Desinfektion und Prüfung der Reinheit von gewerblichen und industriellen Anlagen oder Anlagenteilen, bei dem eine wässrige Lösung mit einem pH-Wert von mindestens 11, vorzugsweise mindestens 12, durch die zu reinigenden bzw. desinfizierenden Anlagen oder Anlagenteilen zirkuliert wird, **dadurch gekennzeichnet, dass** während der Zirkulation ein flüssiges Reinigungs-, Desinfektions- und Indikatormittel enthaltend
• ein wasserlösliches Permanganat,
• ein weiteres Oxidationsmittel, dessen Oxidationspotential über jenem von Mangan VII zu Mangan VI liegt,
• pH-Puffersubstanzen, vorzugsweise primäre und/oder sekundäre Alkalikarbonate wie etwa Natriumkarbonat und/oder Natriumhydrogenkarbonat, sowie
• oxidationsbeständige Polyphosphate zugemischt wird und der Reinigungsfortschritt durch Ermittlung der Intensität des vom zugemischten Reinigungs-, Desinfektions- und Indikatormittels emittierten Lichts im violetten Wellenlängenbereich verfolgt wird.

12. Verfahren nach Anspruch 11, **dadurch gekennzeichnet, dass** der Reinigungsfortschritt zusätzlich durch Ermittlung der Intensität des vom zugemischten Reinigungs-, Desinfektions- und Indikatormittel emittierten Lichts im grünen und/oder gelben Wellenlängenbereich verfolgt wird.

13. Verfahren nach einem der Ansprüche 9 bis 12, **dadurch gekennzeichnet, dass** das Reinigungs-, Desinfektions- und Indikatormittel folgende Zusammensetzung aufweist;
• 3-5% Natriumperoxodisulfat, vorzugsweise 4%
• 0.06-0.08% Kaliumpermanganat, vorzugsweise 0.07%
• 5-7% Natrium-Tripolyphosphat, vorzugsweise 6%
• 9-11% Natrium-Hexametaphosphat, vorzugsweise 10%
• 2.0-3.0%, vorzugsweise 2.6%, einer Mischung aus Natriumkarbonat und Natriumhydrogenkarbonat, vorzugsweise im Verhältnis von 3:1

14. Verfahren nach einem der Ansprüche 9 bis 13, **dadurch gekennzeichnet, dass** die Ermittlung der Lichtintensität automatisiert erfolgt.

15. Verfahren nach einem der Ansprüche 9 bis 14, **dadurch gekennzeichnet, dass** aus der Intensitätsänderung des emittierten Lichts sowie der eingesetzten Menge des Reinigungs-, Desinfektions- und Indikatormittels die abgeführte Schmutzfracht errechnet wird.

16. Verwendung einer Lösung aus einem Reinigungs-, Desinfektions- und Indikatormittel enthaltend
• ein wasserlösliches Permanganat,
• ein weiteres Oxidationsmittel, dessen Oxidationspotential über jenem von Mangan VII zu Mangan VI liegt,
• pH-Puffersubstanzen, vorzugsweise primäre und/oder sekundäre Alkalikarbonate wie etwa Natriumkarbonat und/oder Natriumhydrogenkarbonat, sowie
• oxidationsbeständige Polyphosphate
und einem Mittel zur Sicherstellung eines alkalischen Milieus mit einem pH-Wert von mindestens 11, vorzugsweise mindestens 12, als Indikatorlösung zur Ermittlung der Reinheit von gewerblichen und industriellen Anlagen oder Anlagenteilen mittels Ermittlung der Intensität des von der Lösung emittierten Lichts im violetten Wellenlängenbereich.

17. Verwendung einer Lösung nach Anspruch 16 als Indikatorlösung zur Ermittlung der Reinheit von gewerblichen und industriellen Anlagen oder Anlagenteilen mittels Ermittlung der Intensität des von der Lösung emittierten Lichts im grünen und/oder gelben Wellenlängenbereich.

## Claims

1. A cleaning, disinfection, and indicator agent in liquid form containing a water-soluble permanganate, in particular for admixing with an agent for ensuring an alkaline milieu having a pH value of at least 11, **characterized in that**, in addition to the water-soluble permanganate, it comprises:
- a further oxidizing agent, whose oxidation potential is above that of manganese VII to manganese VI,
- pH buffer substances, preferably primary and/or secondary alkali carbonates such as sodium carbonate and/or sodium hydrogen carbonate, and
- oxidation-resistant polyphosphates.

2. The cleaning, disinfection, and indicator agent according to Claim 1, **characterized in that** the oxidation potential of the further oxidizing agent is above that of HO₂⁻ to OH⁻.

3. The cleaning, disinfection, and indicator agent according to Claim 1 or 2, **characterized in that** the further oxidizing agent is a persulfate, preferably a peroxodisulfate.

4. The cleaning, disinfection, and indicator agent according to Claim 3, **characterized in that** the peroxodisulfate is sodium peroxodisulfate.

5. The cleaning, disinfection, and indicator agent according to one of Claims 1 through 4, **characterized in that** the permanganate is potassium permanganate.

6. The cleaning, disinfection, and indicator agent according to one of Claims 1 through 5, **characterized in that** it contains sodium tripolyphosphate as the oxidation-resistant polyphosphate.

7. The cleaning, disinfection, and indicator agent according to one of Claims 1 through 6, **characterized in that** it contains sodium hexametaphosphate as the oxidation-resistant polyphosphate.

8. The cleaning, disinfection, and indicator agent according to one of Claims 1 through 7, **characterized in that** it has the following composition:
- 3-5% sodium peroxodisulfate, preferably 4%
- 0.06-0.08% potassium permanganate, preferably 0.07%
- 5-7% sodium tripolyphosphate, preferably 6%
- 9-11% sodium hexametaphosphate, preferably 10%
- 2.0-3.0%, preferably 2.6%, of a mixture of sodium carbonate and sodium hydrogen carbonate, preferably in the ratio 3:1.

9. A method for cleaning, disinfecting, and monitoring the cleanliness of commercial and industrial plants or plant components, **characterized in that** in a first step, a cleaning, disinfection, and indicator agent comprising
- a water-soluble permanganate,
- a further oxidizing agent, whose oxidation potential is above that of manganese VII to manganese VI,
- pH buffer substances, preferably primary and/or secondary alkali carbonates such as sodium carbonate and/or sodium hydrogen carbonate, as well as
- oxidation-resistant polyphosphates
is combined in aqueous solution with an agent for ensuring an alkaline milieu having a pH value of at least 11, preferably at least 12, in a second step, the solution thus obtained is circulated through the plants or plant components to be cleaned and/or disinfected and the cleaning progress is tracked by ascertaining the intensity of the light emitted in the violet wavelength range by the solution.

10. The method according to Claim 9, **characterized in that** the cleaning progress is additionally tracked by ascertaining the intensity of the light emitted in the green and yellow wavelength ranges by the solution.

11. A method for cleaning, disinfecting, and monitoring the cleanliness of commercial and industrial plants or plant components, in which an aqueous solution having a pH value of at least 11, preferably at least 12, is circulated through the plants or plant components to be cleaned and/or disinfected, **characterized in that** during the circulation, a liquid cleaning, disinfection, and indicator agent comprising
- a water-soluble permanganate,
- a further oxidizing agent, whose oxidation potential is above that of manganese VII to manganese VI,
- pH buffer substances, preferably primary and/or secondary alkali carbonates such as sodium carbonate and/or sodium hydrogen carbonate, as well as
- oxidation-resistant polyphosphates
is admixed and the cleaning progress is tracked by ascertaining the intensity of the light emitted in the violet wavelength range by the admixed cleaning, disinfection, and indicator agent.

12. The method according to Claim 11, **characterized in that** the cleaning progress is additionally tracked by ascertaining the intensity of the light emitted in the green and/or yellow wavelength ranges by the admixed cleaning, disinfection, and indicator agent.

13. The method according to one of Claims 9 to 12, **characterized in that** the cleaning, disinfection, and indicator agent has the following composition:
- 3-5% sodium peroxodisulfate, preferably 4%
- 0.06-0.08% potassium permanganate, preferably 0.07%
- 5-7% sodium tripolyphosphate, preferably 6%
- 9-11% sodium hexametaphosphate, preferably 10%
- 2.0-3.0%, preferably 2.6%, of a mixture of sodium carbonate and sodium hydrogen carbonate, preferably in the ratio 3:1.

14. The method according to one of Claims 9 to 13, **characterized in that** the light intensity is ascertained automatically.

15. The method according to one of Claims 9 to 14, **characterized in that** the removed contaminant load is calculated from the intensity change of the light emitted and the quantity of the cleaning, disinfection, and indicator agent used.

16. A use of a solution made of a cleaning, disinfection, and indicator agent comprising
- a water-soluble permanganate,
- a further oxidizing agent, whose oxidation potential is above that of manganese VII to manganese VI,
- pH buffer substances, preferably primary and/or secondary alkali carbonates such as sodium carbonate and/or sodium hydrogen carbonate, as well as
- oxidation-resistant polyphosphates
and an agent for ensuring an alkaline milieu having a pH value of at least 11, preferably at least 12, as an indicator solution for ascertaining the cleanliness of commercial and industrial plants or plant components by ascertaining the intensity of the light emitted in the violet wavelength range by the solution.

17. The use of a solution according to Claim 16 as an indicator solution for ascertaining the cleanliness of commercial and industrial plants or plant components by ascertaining the intensity of the light emitted in the green and/or yellow wavelength ranges by the solution.

## Revendications

1. Agent nettoyant, désinfectant et indicateur sous forme liquide contenant un permanganate hydrosoluble, destiné en particulier à être mélangé à un agent pour maintenir un milieu alcalin ayant un pH d'au moins 11, **caractérisé en ce qu'**outre le permanganate hydrosoluble, il contient
• un autre oxydant dont le potentiel d'oxydation est supérieur à celui du manganèse VII au manganèse VI,
• des substances de tamponnement du pH, de préférence des carbonates alcalins primaires et/ou secondaires tels que le carbonate de sodium et/ou l'hydrogénocarbonate de sodium, et
• des polyphosphates résistants à l'oxydation.

2. Agent nettoyant, désinfectant et indicateur selon la revendication 1, **caractérisé en ce que** le potentiel d'oxydation de l'autre oxydant est supérieur à celui du HO₂⁻ en OH⁻.

3. Agent nettoyant, désinfectant et indicateur selon la revendication 1 ou 2, **caractérisé en ce que** l'autre oxydant est un persulfate, de préférence un peroxodisulfate.

4. Agent nettoyant, désinfectant et indicateur selon la revendication 3, **caractérisé en ce que** le peroxodisulfate est du peroxodisulfate de sodium.

5. Agent nettoyant, désinfectant et indicateur selon l'une des revendications 1 à 4, **caractérisé en ce que** le permanganate est du permanganate de potassium.

6. Agent nettoyant, désinfectant et indicateur selon l'une des revendications 1 à 5, **caractérisé en ce qu'**il contient comme polyphosphate résistant à l'oxydation du tripolyphosphate de sodium.

7. Agent nettoyant, désinfectant et indicateur selon l'une des revendications 1 à 6, **caractérisé en ce qu'**il contient comme polyphosphate résistant à l'oxydation de l'hexamétaphosphate de sodium.

8. Agent nettoyant, désinfectant et indicateur selon l'une des revendications 1 à 7, **caractérisé en ce qu'**il présente la composition suivante :
• 3 à 5 % de peroxodisulfate de sodium, de préférence 4 %
• 0,06 à 0,08 % de permanganate de potassium, de préférence 0,07 %
• 5 à 7 % de tripolyphosphate de sodium, de préférence 6 %
• 9 à 11 % d'hexamétaphosphate de sodium, de préférence 10 %
• 2,0 à 3,0 %, de préférence 2,6 %, d'un mélange de carbonate de sodium et d'hydrogénocarbonate de sodium, de préférence dans une proportion de 3:1.

9. Procédé pour le nettoyage, la désinfection et le contrôle de la propreté d'installations ou parties d'installations artisanales et industrielles, **caractérisé en ce que** dans une première étape, un agent nettoyant, désinfectant et indicateur contenant
• un permanganate hydrosoluble
• un autre oxydant dont le potentiel d'oxydation est supérieur à celui du manganèse VII au manganèse VI,
• des substances de tamponnement du pH, de préférence des carbonates alcalins primaires et/ou secondaires tels que le carbonate de sodium et/ou l'hydrogénocarbonate de sodium, et
• des polyphosphates résistants à l'oxydation
en solution aqueuse est mélangé avec un agent pour maintenir un milieu alcalin ayant un pH d'au moins 11, de préférence au moins 12, dans une deuxième étape la solution ainsi obtenue est mise en circulation dans les installations ou parties d'installation à nettoyer ou désinfecter et la progression du nettoyage est suivie par la détermination de l'intensité de la lumière émise par la solution dans la plage de longueur d'ondes du violet.

10. Procédé selon la revendication 9, **caractérisé en ce que** la progression du nettoyage est en outre suivie par détermination de la lumière émise par la solution dans la plage de longueur d'ondes du vert et du jaune.

11. Procédé pour le nettoyage, la désinfection et le contrôle de la propreté d'installations ou parties d'installations artisanales et industrielles dans lequel une solution aqueuse ayant un pH d'au moins 11, de préférence au moins 12, est mise en circulation dans les installations ou parties d'installation à nettoyer ou désinfecter, **caractérisé en ce que** pendant la circulation, un agent nettoyant, désinfectant et indicateur liquide contenant
• un permanganate hydrosoluble
• un autre oxydant dont le potentiel d'oxydation est supérieur à celui du manganèse VII au manganèse VI,
• des substances de tamponnement du pH, de préférence des carbonates alcalins primaires et/ou secondaires tels que le carbonate de sodium et/ou l'hydrogénocarbonate de sodium, et
• des polyphosphates résistants à l'oxydation
est ajouté et la progression du nettoyage est suivie par détermination de la lumière émise par l'agent nettoyant, désinfectant et indicateur ajouté dans la plage de longueur d'ondes du violet.

12. Procédé selon la revendication 11, **caractérisé en ce que** la progression du nettoyage est suivie par détermination de la lumière émise par l'agent nettoyant, désinfectant et indicateur ajouté dans la plage de longueur d'ondes du vert et/ou du jaune.

13. Procédé selon l'une des revendications 9 à 12, **caractérisé en ce que** l'agent nettoyant, désinfectant et indicateur présente la composition suivante :
• 3 à 5 % de peroxodisulfate de sodium, de préférence 4 %
• 0,06 à 0,08 % de permanganate de potassium, de préférence 0,07 %
• 5 à 7 % de tripolyphosphate de sodium, de préférence 6 %
• 9 à 11 % d'hexamétaphosphate de sodium, de préférence 10 %
• 2,0 à 3,0 %, de préférence 2,6 %, d'un mélange de carbonate de sodium et d'hydrogénocarbonate de sodium, de préférence dans une proportion de 3:1.

14. Procédé selon l'une des revendications 9 à 13, **caractérisé en ce que** la détermination de l'intensité lumineuse est automatisée.

15. Procédé selon l'une des revendications 9 à 14, **caractérisé en ce que** la charge d'impuretés évacuée est calculée à partir du changement d'intensité de la lumière émise et de la quantité utilisée d'agent nettoyant, désinfectant et indicateur.

16. Utilisation d'une solution d'un agent nettoyant, désinfectant et indicateur contenant
• un permanganate hydrosoluble
• un autre oxydant dont le potentiel d'oxydation est supérieur à celui du manganèse VII au manganèse VI,
• des substances de tamponnement du pH, de préférence des carbonates alcalins primaires et/ou secondaires tels que le carbonate de sodium et/ou l'hydrogénocarbonate de sodium, et
• des polyphosphates résistants à l'oxydation
et d'un agent pour maintenir un milieu alcalin ayant un pH d'au moins 11, de préférence au moins 12, comme solution d'indicateur pour déterminer la propreté d'installations ou de parties d'installation artisanales et industrielles au moyen de la détermination de l'intensité de la lumière émise par la solution dans la plage de longueurs d'onde du violet.

17. Utilisation d'une solution selon la revendication 16 comme solution d'indicateur pour déterminer la propreté d'installations ou de parties d'installation artisanales et industrielles au moyen de la détermination de l'intensité de la lumière émise par la solution dans la plage de longueurs d'onde du vert et/ou du jaune.
